# EUROPEAN PATENT APPLICATION

(11) **EP 3 483 779 A1**
(43) Date of publication of application: **15.05.2019**
(21) Application number: 16924157.7
(22) Date of filing: 12.12.2016
(51) Int. Cl.: G06K 9/00

(54) **FINGERPRINT RECOGNITION MODULE HAVING BACKLIGHT**

(71) Applicant: Butterfly Technology (Shenzhen) Limited, Shenzhen, Guangdong 518118 (CN)
(72) Inventor: YI, Zhiming, Shenzhen Guangdong 518118 (CN); XIANG, Peng, Shenzhen Guangdong 518118 (CN); FU, Qiang, Shenzhen Guangdong 518118 (CN); YE, Yong, Shenzhen Guangdong 518118 (CN)
(74) Representative: Westphal, Mussgnug & Partner Patentanwälte mbB
(86) International application number: PCT/CN2016/109534
(87) International publication number: WO 2018/107340

(57) **Abstract**

The present disclosure provides a fingerprint identification module with a backlight, including at least one light source connected to a circuit board and at least one transparent area defined in a panel; meanwhile, an adhesive layer between the fingerprint identification chip and the panel is thickened; with the adhesive layer being the main light guide medium, light emitting from the light source emits out from the transparent area in the panel through transmitting the adhesive layer; and the light source can be arranged outside a packaging material or packed inside the packaging material with a bare die. The fingerprint identification module of the present disclosure is capable of realizing the backlight function of the fingerprint identification module in a limited space as well as lightening the transparent pattern formed in the transparent area of the panel.

## Description

### TECHNICAL FIELD

The present disclosure generally relates to fingerprint identification modules, and particularly, to capacitive sensor fingerprint identification module or RF sensor fingerprint identification module for smart phones and other products, and more particularly, to a fingerprint identification module with an adhesive layer as the main light guide medium and equipped with a backlight.

### BACKGROUND

Due to the extremely-small repetition rate being about one of 15 billion (i.e. 1/15,000,000,000), people's fingerprints have the features of being body identifications. Since fingerprints remain unchanged in a person's life and are unique and convenient, fingerprint identifications almost become synonymous with biometric feature identifications. Fingerprint identification technologies are widely applied, and smart mobile phones use a large number of fingerprint identification modules. According to statistics, the shipments of smart mobile phones in China reach eighty million each month, wherein the shipments of smart mobile phones configured with fingerprint identification modules reach from 35 to 40 million.

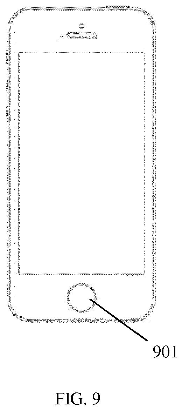

As shown in FIG. 9, a fingerprint identification module 901 configured in a smart mobile phone generally includes a capacitive sensor or a RF sensor. A panel of this type of fingerprint identification module cannot emit light and thus cannot be lightened to display a predetermined transparent pattern (e.g., a trademark of a company). If the panel can display the predetermined transparent pattern, the fingerprint identification module may become attractive and the brand recognizability thereof can be greatly improved.

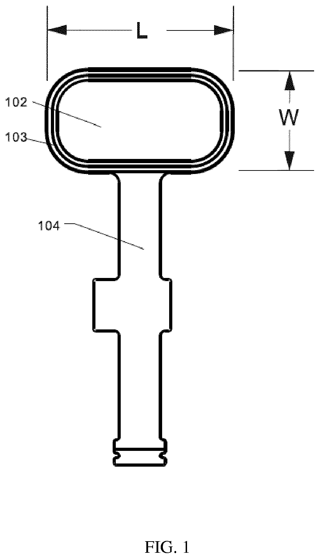

A typical structure of the fingerprint identification module is as shown in FIG. 1. A fingerprint identification module 100 can be electronically connected to a control circuit of a smart mobile phone through a circuit board 104. A panel 102 shown in the upper area of FIG. 1 is used for holding a user's finger to conduct fingerprint identification, and a metal ring 103 is arranged in a periphery of the panel 102. A length L and a width W of the panel 102 are respectively about 10 mm.

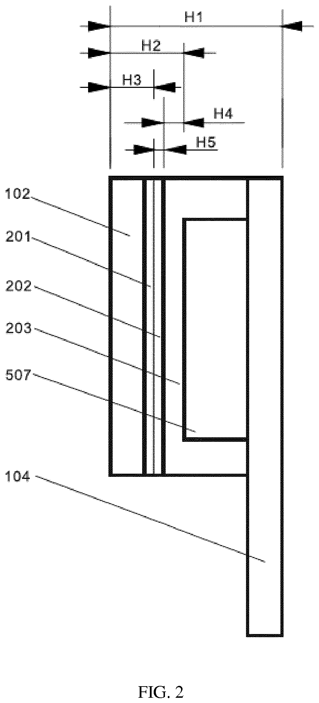

FIG. 2 is a side cross-sectional view of the fingerprint identification module. A fingerprint identification chip 203 is electrically connected to the circuit board 104. The fingerprint identification chip 203 is adhered to the panel 102 with ink 201 coated on a bottom thereof through an adhesive layer 202. The panel 102 (also called cover in some embodiments) can be made of glass, sapphire, ceramics, or resin, etc. The panel of the present fingerprint identification module cannot emit light due to the structure of the fingerprint identification module; compared with the fingerprint identification module illustratively shown in FIG. 2, the actual thickness size of each component of the fingerprint identification module are very small. A thickness H1 of the whole fingerprint identification module is only about 1 mm due to the limitations from the requirements of realizing corresponding product functions and the lighting and thinning design of the mobile phone; a thickness H5 of the adhesive layer 202 ranges from 0.01 to 0.02 mm; a thickness H3 of the panel 102 is about 0.2 mm; a thickness H4 of a package of a fingerprint identification chip of the fingerprint identification module is about 0.1 mm; and the identification thickness of the fingerprint identification chip, that is, the maximum vertical distance H2 from a touch point to an upper surface of a bare die of the fingerprint identification chip is often controlled to be less than 0.35 mm. Thus, it will be troublesome for the massive production of the fingerprint identification module and it will raise cost when adding any complex optical structure to the fingerprint identification module, unsatisfying of the requirement of the massive production.

Meanwhile, capacitive sensors and RF sensors are used in the present fingerprint identification modules, and strict requirements are placed on the dielectric performance or other performances of the material of the fingerprint identification module, thus, the light source can only be arranged on sides of the fingerprint identification chip rather than at a center or on a top of the fingerprint identification chip. Based on the present structure, if the adhesive layer 202 is transparent, the adhesive layer 202 may become the only light-transmissive part of the fingerprint identification module. However, the adhesive layer 202 is so thin that effective optical pathway cannot be provided, preventing the light emitting from the light source from being guided onto the panel to display the transparent pattern.

### SUMMARY OF THE DISCLOSURE

Therefore, the present disclosure aims to solve the problem that the panel of the present fingerprint identification module cannot emit light and cannot be lightened to display the predetermined transparent pattern.

Correspondingly, the present disclosure provides the following solution: a fingerprint identification module with a backlight, including a circuit board, a fingerprint identification chip configured on the circuit board, and a panel adhered to the fingerprint identification chip through an adhesive layer; wherein the fingerprint identification module further includes at least one light source arranged below the adhesive layer and connected to the circuit board; the panel defines at least one transparent area; the adhesive layer is made of transparent material with a thickness ranging from 0. 01 mm to 1 mm; and the adhesive layer is the main light guide medium of light emitting from the light source, and the light emits out from the transparent area in the panel through the adhesive layer.

In an embodiment, the fingerprint identification chip includes a packaging material and a bare die, the packaging material is transparent or opaque, and the light source is arranged outside the packaging material; in other embodiments, the light source and the bare die can be packed in the packaging material, and the packaging material is transparent.

In an embodiment, the fingerprint identification chip includes a bare die without a packaging material, the light source is arranged around the bare die and is adhered to a lower surface of the panel through the adhesive layer.

In an embodiment, at least one of the following positions is provided with a light adjusting member: inside the packaging material, inside the adhesive layer, on a top of the bare die, on a top of the packaging material, and on a bottom of the transparent area in the panel; the light adjusting member can be fluorescent powder; or, the light adjusting member includes micro-particles and/or micro-pores for adjusting a transmission direction and/or components of the light.

In an embodiment, at least one of the following positions is provided with insulated reflective material: on a top of the bare die or an opaque area in a bottom of the panel.

In an embodiment, one of a high reflective coating, a reflective cover, and a reflective mirror is arranged corresponding to one side of the light source facing away from the transparent area, partially surrounding the light source for condensing the light towards the transparent area.

In an embodiment, the light source is mainly directed toward the transparent area, and the light source is selected from a light emitting diode, a light emitting diode core, a laser, a laser core, a laser array core, an organic light emitter, and an organic light emitting array device.

In an embodiment, the light emitting area forms a company trademark, a common identification, or a predetermined transparent pattern.

With the above solution provided in the present disclosure, the fingerprint identification module is capable of satisfying the fingerprint identification requirements as well as using at least one of the light source as the backlight source in a limited space to realize the backlight function of the fingerprint identification module. In addition, the panel of the fingerprint identification module is capable of lighting the transparent pattern formed in the transparent area of the panel, thereby improving the appearance of the fingerprint identification module and brand recognizability.

### BRIEF DESCRIPTION OF THE DRAWINGS

The present disclosure will be described in more detail with reference to the accompany drawings and the embodiments, wherein in the drawings:
FIG. 1 is a schematic view of a present fingerprint identification module;
FIG. 2 is an enlarged side cross-sectional view of the fingerprint identification module of FIG. 1;
FIG. 3 is an exploded view of a fingerprint identification module in accordance an embodiment of the present disclosure;
FIG. 4 is a top view showing an arrangement of light sources of the fingerprint identification module of FIG. 3;
FIG. 5 is an enlarged side cross-sectional view of the fingerprint identification module of FIG. 3;
FIG. 6 is an exploded view of a fingerprint identification module in accordance with another embodiment of the present disclosure;
FIG. 7 is a top view showing an arrangement of a light source of the fingerprint identification module of FIG. 6;
FIG. 8 is an enlarged side cross-sectional view of the fingerprint identification module of FIG. 6; and
FIG. 9 is a schematic view of a present smart mobile phone with a fingerprint identification module.

### PREFERRED EMBODIMENTS

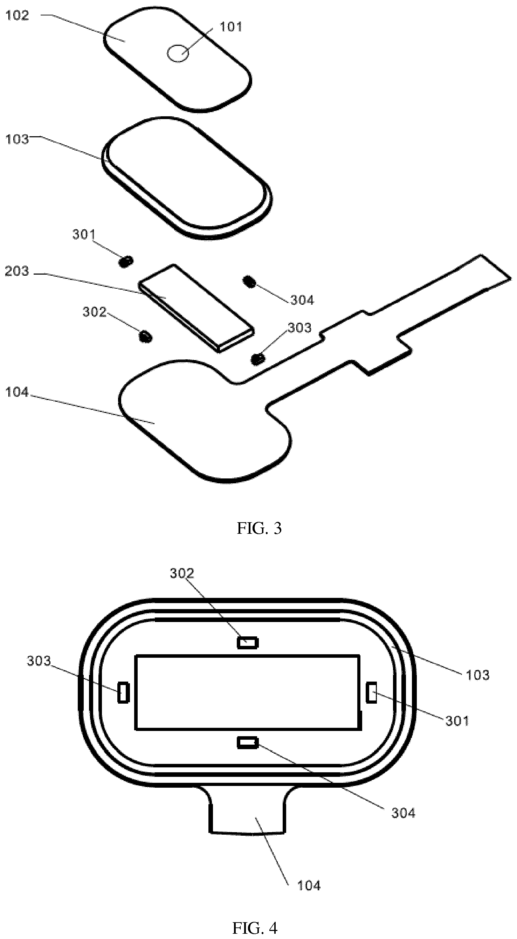

As shown in FIG. 3, a fingerprint identification module in accordance with one embodiment of the present disclosure is provided. In the embodiment, a transparent area is defined in a panel 102. The transparent area is capable of forming a transparent pattern 101. The present fingerprint identification module as shown in FIG. 1 is typically opaque and thus cannot form the transparent pattern 101. The transparent pattern 101 can have different shapes, in some embodiments, the transparent pattern 101 can be a company trademark, a common identification, or other patterns.

In the embodiment, the fingerprint identification module includes a fingerprint identification chip 203 and four light sources 301, 302, 303,and 304 arranged around the fingerprint identification chip 203. The light sources and the fingerprint identification chip are physically and electrically connected to a circuit board 104 of the fingerprint identification module through welding, which is as shown in FIG. 4 when viewed from the top. In some embodiments, the number of the light sources and the positions of the light sources can be adjusted accordingly. The panel 102 is adhered to the fingerprint identification chip 203 through an adhesive layer. A metal ring 103 surrounds the panel 102 and the fingerprint identification chip 203. The metal ring 103 is physically and electrically connected to the circuit board 104.

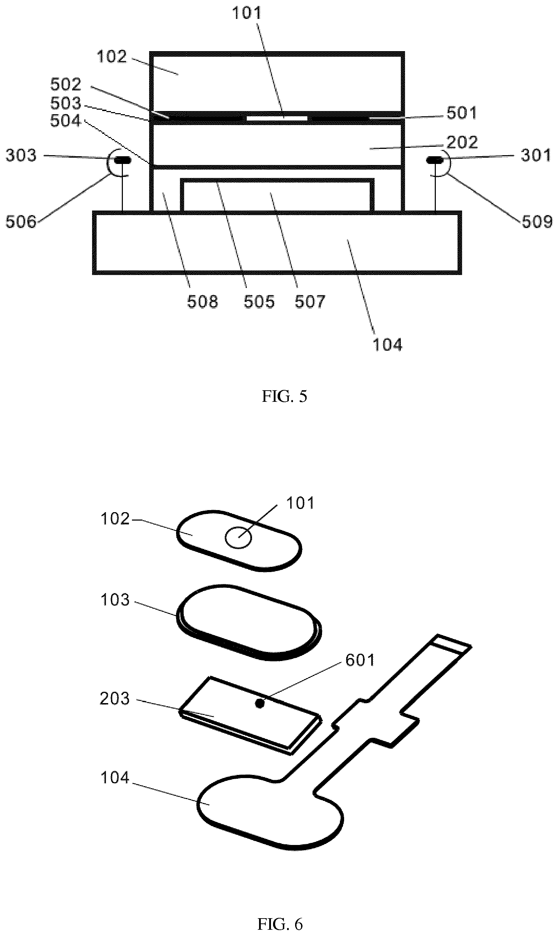

As shown in FIG.5, two black ink areas 501 and 502 are coated on a bottom of the panel 102 by printing. A gap is defined between the two black ink areas to define the transparent area where forms the predetermined transparent pattern 101. In some embodiments, transparent ink can be coated on the gap to define the transparent area. The panel 102 with the ink areas 501, 502 and the transparent pattern 101 is adhered to the fingerprint identification chip through the adhesive layer 202. The fingerprint identification chip includes a bare die 507 and a packaging material 508. In some embodiments, the adhesive layer 202 is made of transparent material which maybe colored transparent material or colorless transparent material.

In the embodiment shown in FIG. 5, a thickness of the adhesive layer 202 is 0.15mm, and a thickness of the packaging material between a top surface of the bare die and the adhesive layer is 0.05 mm. The positions of the light sources 301, 303 are slightly higher than a lower surface of the adhesive layer. With the adhesive layer 202 being the main light guide medium, light emitting from the light sources 301 and 303 emits out from the transparent pattern 101 formed in the panel through transmitting the adhesive layer.

In the embodiment shown in FIG. 5, the packaging material can be transparent or opaque. When the packaging material is transparent, the positions of the light sources can be slightly below the lower surface of the adhesive layer.

In the embodiment, the adhesive layer 202 is colorless and transparent and a light adjusting member is mixed in the adhesive layer 202. In other embodiments, the light adjusting member can be arranged on a top 504 of the packaging material, a top 505 of the bare die 507, or a bottom of the transparent area of the panel 202. When the light adjusting member is arranged on the bottom of the panel, the light adjusting member is configured for covering the area corresponding to the transparent pattern 101.

FIG. 5 exemplarily illustrates the light sources 301, 303. In some embodiments, the light sources 301, 303 and other light sources not shown in FIG. 5 are physically and electrically connected to the circuit board 104. Lighting centers of the light sources 301, 303 are formed on tops thereof respectively. Heights of the lighting centers of the light sources are higher than the bare die 507 and are below the bottom 503 of the panel, for ensuring the luminous effect. The light sources emit light towards the transparent pattern 101.

In an embodiment, the light source can be a blue light emitting diode such as a III family nitride light-emitting diode; the light adjusting member can be proper fluorescent powder. For example, there are two types of Europium-doped red nitride fluorescent power, one having a structural formula being written as M₂xSi₅N₈: xEu²⁺(M=Ca, Sr, Ba, wherein 0≤x≤0.4) and the other one as CaAlSiN₃:Eu²⁺. There are two main types of green nitride fluorescent powder and yellow nitride fluorescent powder, one is Sialon powder which is activated by rare earth ions such as Eu²⁺,Ce³⁺,Y²⁺, and the other is MSiO₂N₂ powder.

In the present disclosure, the light source and the light adjusting member can be combined in various ways. One having ordinary skill in the art can choose a type, a light color, and a wavelength of the light source according to actual applications, or can choose a type and a ratio of the light adjusting member to change the luminous effect of the transparent pattern. The light adjusting member can be fluorescent powder or micro-particles and/ or micro-pores which are capable of changing a transmission direction and/ or components of the light. When the light adjusting member is micro optical structures like micro-particles or micro-pores, multiple optical phenomena such as reflection, refraction, diffraction, scatter, polarization of the light may occur at the same time when the light transmits there through. These optical phenomena may change accordingly with the changing of the sizes of the micro-particles or micro-pores, which is in fact caused by the changing of the transmission direction and the components of the light. When the transmission direction of the light is changed, the object can be illuminated even if the light source cannot be directly seen by a user; when the components of the light are changed, the wavelength and a polarization of the light may be changed, for example, the blue sky or red sky is caused by the scatter of the sun light which is caused by the micro-particles in the air.

In addition, optical effect can be improved by coating, printing, or spluttering insulated reflective material on the bottom of the opaque area in the panel 102, that is, the bottoms of the ink area 501 and 502. Moreover, the top 505 of the bare die also can be configured with insulated reflective material.

As shown in FIG. 5, two reflective covers 506 and 509 are configured corresponding to one side of the light sources 301 and 303 which is away from the transparent pattern 101, to improve the optical effect.

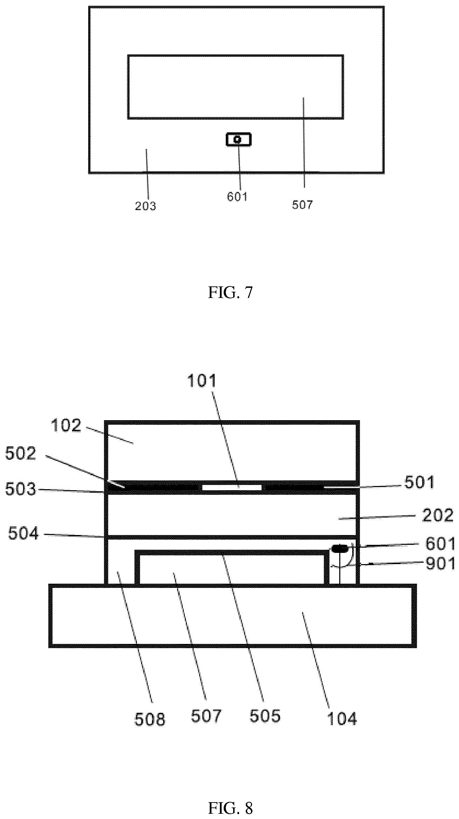

FIG. 6 shows a fingerprint identification module in accordance with another embodiment of the present disclosure. In the embodiment, a light source 601 is integrated in a fingerprint identification chip 203. The light source and the fingerprint identification chip 203 are physically and electrically connected to a circuit board 104 through welding, the position of which is as shown in FIG. 7 when viewed from the top. A panel 102 is adhered to the fingerprint identification chip 203 through an adhesive layer. A metal ring 103 surrounds the panel 102 and the fingerprint identification chip 203. The metal ring 103 is physically and electrically connected to the circuit board 104. A transparent pattern 101 is formed in the panel 102.

As shown in FIG. 7, a bare die 507 and a light source 601 are packaged inside the fingerprint identification chip 203. The number and the position of the light source are not limited to the embodiments shown in FIGS. 6 and 7; in some embodiments, as long as the normal operation of bare core 507 is not affected, the number and the position of the light source can be adjusted according to actual applications.

As shown in FIG. 8, two black ink areas 501 and 502 are coated on a bottom of the panel 102 through printing. A gap is defined between these two black ink areas to form the predetermined transparent pattern 101. In some embodiments, transparent ink can be coated between these two black ink areas to form the predetermined transparent pattern 101. The panel 102 with the ink areas 501, 502 and the transparent pattern 101 is adhered to the fingerprint identification chip through the adhesive layer 202. The fingerprint identification chip includes a bare die 507 and a packaging material 508. The light source 601 and other light sources not shown in FIGS. 7 and 8 are packaged inside the packaging material 508. The packaging material 508 can be transparent material, maybe colorless transparent material, or colored transparent material.

As shown in FIG. 8, a light reflective cover 901 is arranged on one side of the light source 601 away from the transparent pattern 101 to improve optical effect of the light source 601.

In the embodiment shown in FIG. 8, the packaging material 508 and the adhesive layer 202 are both made of transparent material. A thickness of the adhesive layer 202 is 0. 18mm, and a thickness of the packaging material between a top surface of the bare die and the adhesive layer is 0.05 mm. With the adhesive layer 202 being the main light guide medium, light emitting from the light source 601 emits out from the transparent pattern 101 formed in the panel through transmitting the packaging material 508 and the adhesive layer 202.

In addition to the embodiments shown in FIG.5 and FIG.8, the fingerprint identification chip can be a bare die without packaging material, the light source is arranged surrounding the bare die and is adhered to a lower surface of the panel through the adhesive layer.

## Claims

1. A fingerprint identification module with a backlight, comprising a circuit board, a fingerprint identification chip configured on the circuit board, and a panel adhered to the fingerprint identification chip through an adhesive layer; wherein:
the fingerprint identification module further comprises at least one light source arranged below the adhesive layer and connected to the circuit board;
the panel defines at least one transparent area;
the adhesive layer is made of transparent material with a thickness ranging from 0. 01 mm to 1 mm; and
the adhesive layer is the main light guide medium of light emitting from the light source, and the light emits out from the transparent area in the panel through the adhesive layer.

2. The fingerprint identification module of claim 1, wherein the fingerprint identification chip comprises a packaging material and a bare die, the packaging material is transparent or opaque, and the light source is arranged outside the packaging material.

3. The fingerprint identification module of claim 1, wherein the fingerprint identification chip comprises a packaging material and a bare die, the packaging material is transparent, and the light source and the bare die are packed in the packaging material.

4. The fingerprint identification module of claim 1, wherein the fingerprint identification chip comprises a bare die without a packaging material, the light source is arranged around the bare die and is adhered to a lower surface of the panel through the adhesive layer.

5. The fingerprint identification module of any one from claim 2 to 4, wherein at least one of the following positions is provided with a light adjusting member: inside the packaging material, inside the adhesive layer, on a top of the bare die, on a top of the packaging material, and on a bottom of the transparent area in the panel.

6. The fingerprint identification module of claim 5, wherein the light adjusting member is fluorescent powder; or, the light adjusting member comprises micro-particles and/or micro-pores for adjusting a transmission direction and/or components of the light.

7. The fingerprint identification module of any one from claim 2 to 4, wherein at least one of the following positions is provided with insulated reflective material: on a top of the bare die or an opaque area in a bottom of the panel.

8. The fingerprint identification module of any one from claim 1 to 4, wherein one of a high reflective coating, a reflective cover, and a reflective mirror is arranged corresponding to one side of the light source facing away from the transparent area, partially surrounding the light source for condensing the light towards the transparent area.

9. The fingerprint identification module of any one from claim 1 to 4, wherein the light source faces the transparent area, and the light source is selected from a light emitting diode, a light emitting diode core, a laser, a laser core, a laser array core, an organic light emitter, and an organic light emitting array device.

10. The fingerprint identification module of any one from claim 1 to 4, wherein the light emitting area forms a company trademark, a common identification, or a predetermined transparent pattern.
